# DEMANDE DE BREVET EUROPEEN

(11) **EP 3 882 140 A1**
(43) Date de publication de la demande: **22.09.2021**
(21) Numéro de dépôt: 21156465.3
(22) Date de dépôt: 11.02.2021
(51) Int. Cl.: B64C 27/26, B64C 27/57, B64C 11/30, B64C 27/22, B64C 27/56, B64C 27/78

(54) **PROCEDE DE COMMANDE D'AU MOINS UNE HELICE D'UN HELICOPTERE HYBRIDE ET HELICOPTERE HYBRIDE**

(30) Priorité: 17.03.2020 FR 2002608
(71) Demandeur: Airbus Helicopters, 13725 Marignane Cedex (FR)
(72) Inventeur: EGLIN, Paul, 13830 Roquefort-la-Bédoule (FR)
(74) Mandataire: GPI Brevets

(57) **Abrégé**

La présente invention concerne un procédé de commande d'au moins une première hélice (10) d'un hélicoptère hybride (1), ledit hélicoptère hybride (1) ayant une commande de poussée (50) pour piloter un premier pas des premières pales (11) de la première hélice. Ladite commande de poussée (50) comporte un organe de commande mobile. Le procédé comporte les étapes suivantes : transmission en permanence d'un signal de commande porteur d'une consigne de pilotage par la commande de poussée (50) au système de commande (40), transformation de la consigne de pilotage par le système de commande en une consigne de pas et pilotage du premier pas par le système de commande (40) en appliquant ladite consigne de pas.

## Description

La présente invention concerne un procédé de commande d'au moins une hélice d'un hélicoptère hybride et aussi un hélicoptère hybride appliquant ce procédé. L'invention se situe dans le domaine technique des systèmes de commande d'un hélicoptère hybride.

Le projet menant à cette invention a reçu un financement du programme de recherche et d'innovation Horizon 2020 de l'Union européenne, dans le cadre de la convention de subvention CleanSky 2 N° « GAM-FRC-2014-001 Issue E ».

Un type de giravion est dénommé « hélicoptère hybride » par commodité en raison de sa spécificité. Un hélicoptère hybride comporte une cellule portant au moins une voilure tournante munie d'un rotor, ce rotor étant dénommé « rotor de sustentation » par la suite par commodité et en raison d'au moins une de ses fonctions. Le rotor de sustentation participe au moins à la sustentation de l'aéronef voire à son avancement.

Un hélicoptère hybride comprend de plus au moins une hélice, possiblement de type hélice tractive ou propulsive. Par exemple, l'hélicoptère hybride peut être pourvu d'au moins deux hélices agencées transversalement de part et d'autre d'une cellule et de son plan antéropostérieur de symétrie.

Des exemples d'hélicoptères hybrides sont décrits dans les documents US 8181901, US 8170728, US 8052094 et US 8113460 par exemple.

Par ailleurs, un hélicoptère hybride comporte une installation motrice pour mettre en mouvement chaque hélice et le rotor de sustentation, éventuellement en permanence hors cas de panne ou d'essais.

Pour piloter un hélicoptère hybride, un pilote de l'hélicoptère hybride peut manœuvrer une première commande et une deuxième commande pour contrôler respectivement collectivement et cycliquement le pas des pales du rotor de sustentation, via une architecture mécanique et/ou électrique par exemple. La première commande est dénommée par commodité « commande de pas collectif » et prend souvent la forme d'un levier dit « levier de pas collectif ». La deuxième commande est dénommée par commodité « commande de pas cyclique » et prend souvent la forme d'un manche dit « manche cyclique ».

Notamment sur un hélicoptère hybride à au moins deux hélices situées de part et d'autre d'une cellule, le pas des pales de chaque hélice est fonction d'une composante de pas moyen et d'une composante de pas différentiel. Ainsi, le premier pas des premières pales d'une première hélice peut être égal à la somme de la composante de pas moyen et de la composante de pas différentiel alors que le deuxième pas des deuxièmes pales d'une deuxième hélice peut être égal à la composante de pas moyen moins la composante de pas différentiel. En outre, la composante de pas moyen peut être égale à la demi-somme des premier et deuxième pas des deux hélices alors que la composante de pas différentiel peut être égale à la demi-différence des premier et deuxième pas des deux hélices.

Dès lors, des fonctions de contrôle de direction notamment en lacet peuvent être réalisées par l'utilisation d'une commande de lacet apte à modifier la valeur de la composante de pas différentiel. Par exemple, une telle commande de lacet peut comprendre un palonnier relié par un système de commande à architecture mécanique et/ou électrique aux hélices. Le palonnier permet de modifier la valeur de la composante de pas différentiel.

Par ailleurs, l'hélicoptère hybride inclut au moins une commande de la poussée apte à modifier la valeur de la composante de pas moyen, via le système de commande.

La commande de poussée peut prendre la forme d'un bouton qui présente trois états discrets.

Le document FR 2946316 décrit une telle commande impulsionnelle générant des impulsions pouvant prendre les états - 1,0,+1 transmises à un intégrateur. Ce document décrit différents modes de fonctionnement parmi lesquels un mode direct, dans lequel la valeur de la composante pas moyen résulte directement de la manœuvre de la commande impulsionnelle. Dans un mode régulé, on régule la puissance consommée par l'hélice ou les hélices en fonction d'une consigne de puissance issue directement de la manœuvre de la commande impulsionnelle de variation de poussée. Durant un mode forcé, en cas d'autorotation, la composante de pas moyen est forcée automatiquement sur commande du pilote, à une valeur de pas calculée. Enfin un mode protégé est aussi décrit.

Le document WO 2016/043943 divulgue quant à lui un procédé de commande et un mécanisme de commande muni d'un bouton basculant mobile entre une position neutre et une pluralité de positions non neutres. Selon ce procédé de commande, cette pluralité de positions du bouton basculant comporte une première position non neutre permettant de générer le déplacement des pales d'une hélice selon une première direction, une deuxième position non neutre pour générer le déplacement des pales d'une hélice selon une deuxième direction et une troisième position non neutre pour provoquer le déplacement des pales d'une hélice dans des positions induisant une poussée nulle générée par l'hélice.

En outre WO 2016/043943 divulgue également que ce procédé de commande génère une consigne de pas à partir de la position non neutre dans laquelle se trouve positionné le bouton basculant et d'une durée pendant laquelle ce bouton basculant est maintenu dans cette position non neutre.

Le document EP 3 503 149 se rapporte quant à lui un mécanisme de commande électrique muni d'un support. Un corps central mobile en rotation autour d'un axe de rotation central porte un bouton qui est mobile en rotation par rapport au corps central autour d'un axe de rotation déporté parallèle à l'axe de rotation central. Deux interrupteurs primaires électriques sont interposés entre le bouton et le corps central de part et d'autre d'un plan contenant ledit axe de rotation central et l'axe de rotation déporté. Deux interrupteurs secondaires électriques sont interposés entre le support et le corps central de part et d'autre dudit plan.

Le document EP 3 309 061 décrit quant à lui un dispositif de commande électrique muni d'un moyen de manœuvre et d'un support, le moyen de manœuvre étant mobile par rapport à ce support, le moyen de manœuvre étant destiné à être déplacé par rapport au support par un individu, le dispositif de commande électrique comprenant un premier système de mesure qui réalise une première mesure d'une position courante du moyen de manœuvre par rapport à une position neutre.

Un tel dispositif de commande électrique comprend également un deuxième système de mesure qui réalise une deuxième mesure de la position courante, le premier système de mesure et le deuxième système de mesure étant indépendants et dissimilaires, le dispositif de commande comprenant une unité de traitement comparant la première mesure et la deuxième mesure pour générer un signal de commande en fonction de ladite position courante, l'unité de traitement considérant que le moyen de manœuvre est dans la position neutre lorsque la première mesure et la deuxième mesure ne correspondent pas à une même position du moyen de manoeuvre.

Ce document EP 3 309 061 décrit également un procédé comportant les étapes suivantes :
- génération de la première mesure et de la deuxième mesure,
- comparaison de la première mesure et de la deuxième mesure,
- génération d'un taux de variation, de la poussée additionnelle ou du pas de pales d'hélices du système propulsif, pour piloter la poussée additionnelle en fonction de la position dudit moyen de manœuvre par rapport à une référence, ledit taux de variation étant généré en fonction d'une position dite « position mesurée » du moyen de manœuvre lorsque la première mesure et la deuxième mesure correspondent simultanément à la position mesurée du moyen de manœuvre, le taux de variation étant réglé à zéro lorsque la première mesure et la deuxième mesure ne correspondent pas à une même position du moyen de manœuvre.

Le document WO 2011/048399 décrit quant à lui une commande électrique d'hélicoptères comportant des moyens de retour de force apte à générer des efforts sur un manche selon une loi d'effort non linéaire.

Le document US 2004/093130 décrit un procédé de commande d'un aéronef au moyen d'une consigne de pilotage consistant par exemple en une consigne d'accélération longitudinale.

Le document WO 2016/054147 décrit un procédé de commande d'un aéronef au moyen d'une consigne de pilotage consistant par exemple en une consigne de puissance.

La présente invention a alors pour objet de proposer un procédé alternatif pour commander les hélices d'un hélicoptère hybride. Plus précisément, un objectif de la présente invention peut être d'à améliorer la réactivité d'un procédé de pilotage du pas des pales d'une hélice équipant un hélicoptère hybride.

L'invention vise ainsi un procédé de commande d'au moins une première hélice voire d'au moins une deuxième hélice d'un hélicoptère hybride, ledit hélicoptère hybride comportant un rotor de sustentation, ledit hélicoptère hybride comprenant un système de commande relié à des premières pales de la première hélice et le cas échéant à des deuxièmes pales de la deuxième hélice, ledit hélicoptère hybride ayant une commande de poussée pour piloter un premier pas des premières pales et le cas échéant d'un deuxième pas des deuxièmes pales, la commande de poussée étant en communication avec le système de commande. Eventuellement, la commande de poussée peut piloter une composante de pas moyen lorsque le pas de la ou des hélices est décomposé en une composante de pas moyen et une composante de pas différentiel.

La commande de poussée comporte un organe de commande mobile selon au moins un degré de liberté par rapport à un portant. Par exemple, l'organe de commande est déplaçable par un pilote le long d'un chemin de déplacement au moins entre deux positions extrêmes et pouvant être positionné dans n'importe quelle position le long de ce chemin de déplacement entre ces deux positions extrêmes incluses. Le procédé comporte les étapes suivantes :
- transmission en permanence d'un signal de commande porteur d'une consigne de pilotage par la commande de poussée au système de commande, ledit signal de commande étant un signal électrique analogique et à chaque instant fonction d'une position courante de l'organe de commande par rapport au portant au moins hors cas de panne,
- transformation de la consigne de pilotage par le système de commande en une consigne de pas,
- pilotage du premier pas et du deuxième pas par le système de commande en appliquant ladite consigne de pas.

L'expression « au moins hors cas de panne » signifie que le signal de commande est fonction de la position courante de l'organe de commande le long de son chemin de déplacement tant que la commande de poussée fonctionne correctement. En cas de panne de la commande de poussée, le signal de commande est fonction de la position courante de l'organe de commande selon une première alternative et n'est pas fonction de la position courante de l'organe de commande selon une deuxième alternative. Par exemple, selon la deuxième alternative si la commande de poussée rencontre une panne, le signal de commande peut prendre une forme prédéterminée de refuge.

Ainsi, le système de commande peut comprendre une architecture mécanique munie d'actionneurs, hydrauliques ou pneumatiques par exemple, et/ou une architecture mécanique munie d'actionneurs électriques. De plus, le système de commande peut comprendre au moins un calculateur de pilotage ou équivalent en communication avec au moins un actionneur et la commande de poussée.

Contrairement à une commande de type impulsionnelle, la commande de poussée émet en permanence un signal de commande qui varie au moins en fonction de la position de l'organe de commande par rapport au portant. Cette position peut être qualifiée de position courante par commodité.

Ce signal de commande peut par exemple être un signal électrique analogique. Par exemple, ce signal électrique analogique présente une tension électrique continue qui varie en fonction de la position courante. Selon un autre exemple ce signal électrique analogique présente une tension électrique alternative ayant une amplitude qui varie en fonction de la position courante.

Selon un autre exemple, la commande de poussée comporte une roue codeuse mobile conjointement avec l'organe de commande, un lecteur émettant en permanence un signal numérique en fonction de la position courante de la roue codeuse.

Dès lors, la commande de poussée transmet en permanence au système de commande un signal de commande. Le système de commande reçoit ce signal de commande. Le signal de commande varie en fonction de la position de l'organe de commande, par rapport au portant.

Par ailleurs, le terme « porteur » signifie que le signal de commande est l'image de la valeur d'une consigne de pilotage d'un paramètre physique, la forme du signal de commande reflétant la valeur de la consigne de pilotage pilotée par un pilote.

Le système de commande interprète le signal de commande comme ayant une forme fonction d'une consigne de pilotage. Eventuellement, durant cette étape, un convertisseur analogique/numérique permet de convertir un signal de commande de type analogique en une valeur numérique de la consigne de pilotage. En présence d'un signal de commande de type numérique, le signal de commande peut directement fournir la valeur de la consigne de pilotage. Dès lors, le système de commande détermine à partir du signal de commande une consigne de pas, et par exemple le cas échéant une consigne de pas moyen du pas des pales de la ou des hélices. Le système de commande pilote au moins un actionneur pour respecter la consigne de pilotage.

Ce procédé peut permettre à un pilote de doser précisément la commande en pilotant la valeur d'une consigne de pilotage souhaitée et/ou d'atteindre rapidement le point de fonctionnement souhaité.

Ce procédé peut comporter une ou plusieurs des caractéristiques qui suivent.

Ainsi, le procédé peut comporter une étape d'application d'un effort de rappel sur ledit organe de commande pour placer ledit organe de commande dans une position de référence par rapport au portant en l'absence d'un effort exercé par un pilote humain sur l'organe de commande.

Selon cette possibilité un système de rappel peut tendre à placer l'organe de commande dans une position de référence générant un ordre particulier. Lorsque l'organe de commande est dans la position de référence, le signal de commande est porteur d'une consigne visant à avoir une action spécifique sur l'hélicoptère hybride. Par exemple, la position de référence est une position générant une consigne de pilotage prenant une valeur nulle.

Par exemple, la position courante de l'organe de commande peut être identifiée par la position d'un point prédéterminé de l'organe de commande par rapport à une position atteinte par ce point dans la position de référence.

Selon un aspect, l'effort de rappel peut varier selon une loi d'effort, ladite loi d'effort fournissant ledit effort de rappel exercé sur ledit organe de commande par le système de rappel en fonction de ladite position de l'organe de commande par rapport au portant.

L'effort nécessaire pour éloigner l'organe de commande de sa position de référence peut augmenter au fur et à mesure qu'un pilote déplace cet organe de commande.

L'effort de rappel peut être proportionnel au déplacement.

Alternativement, la loi d'effort peut être non linéaire.

Selon un aspect, ledit au moins un degré de liberté peut comporter un degré de liberté en rotation, voire peut comporter un unique degré de liberté qui est un degré de liberté en rotation.

Par exemple, l'organe de commande peut effectuer par rapport au portant une rotation autour d'un axe de rotation de plus ou moins 45 degrés par rapport à une position de référence. Eventuellement, l'organe de commande peut comprendre une molette mobile en rotation autour d'un axe de rotation.

Selon une autre possibilité, ledit au moins un degré de liberté peut comporter un degré de liberté en translation, voire peut comporter un unique degré de liberté qui est un degré de liberté en translation.

Selon un autre aspect et une première réalisation, ladite consigne de pilotage est une consigne d'accélération longitudinale.

L'accélération longitudinale représente l'accélération de l'hélicoptère hybride selon un axe allant de l'arrière vers l'avant de l'aéronef, par exemple sensiblement parallèlement à l'axe de roulis de l'hélicoptère hybride.

Ainsi, lorsque l'organe de commande est dans une position de référence, le signal de commande est porteur d'une consigne d'accélération longitudinale nulle. Le système de commande pilote les hélices pour maintenir constante la vitesse d'avancement de l'hélicoptère hybride.

Lorsque l'organe de commande est entre la position de référence et une première position extrémale incluse, le signal de commande est porteur d'une consigne d'accélération longitudinale positive. Le système de commande pilote les hélices pour accélérer l'hélicoptère hybride afin d'augmenter sa vitesse d'avancement.

Lorsque l'organe de commande est entre la position de référence et une deuxième position extrémale incluse, le signal de commande est porteur d'une consigne d'accélération longitudinale négative. Le système de commande pilote les hélices pour décélérer l'hélicoptère hybride.

Cette première réalisation peut tendre à accélérer ou décélérer rapidement et précisément l'hélicoptère hybride.

Selon une deuxième réalisation, ladite consigne de pilotage est une consigne de vitesse de rotation et d'un sens de rotation des premières pales d'hélice.

Le signal de commande est porteur d'une consigne de modification du premier pas des premières pales et le cas échéant du deuxième pas des deuxièmes pales selon une vitesse et un sens particulier.

Ainsi, lorsque l'organe de commande est dans une position de référence, le signal de commande est porteur d'une consigne de ne pas modifier le premier pas des premières pales et le cas échéant le deuxième pas des deuxièmes pales.

Lorsque l'organe de commande est entre la position de référence et une première position extrémale incluse, le signal de commande est porteur d'un ordre de rotation de chaque pale de la ou des hélices autour de son axe de pas selon un premier sens et une vitesse particulière, la vitesse dépendant de la position courante de l'organe de commande. Le système de commande pilote la ou les hélices en conséquence.

Lorsque l'organe de commande est entre la position de référence et une deuxième position extrémale incluse, le signal de commande est porteur d'une vitesse de rotation de chaque pale de la ou des hélices autour de son axe de pas selon un deuxième sens opposé au premier sens, la vitesse dépendant de la position courante de l'organe de commande. Le système de commande pilote la ou les hélices en conséquence. Par exemple, la consigne de vitesse de rotation de chaque pale d'une hélice autour de son axe de pas prend une valeur positive lorsque la pale doit tourner selon un premier sens et négative dans le cas contraire.

Selon une troisième réalisation, ladite consigne de pilotage est une consigne de puissance.

La première réalisation, la deuxième réalisation et la troisième réalisation sont compatibles entre elles. Par exemple, un pilote peut choisir la réalisation à appliquer.

A cet effet, le procédé peut comporter une étape de sélection avec une interface homme-machine d'un paramètre physique de la consigne de pilotage, ledit paramètre physique pouvant être sur choix d'un pilote une consigne d'accélération longitudinale ou une consigne de vitesse et d'un sens de rotation des premières pales et le cas échéant des deuxièmes pales ou une consigne de puissance, ladite interface homme-machine transmettant un signal de commande porteur dudit choix au système de commande.

Selon une autre approche, ledit procédé peut comporter une étape de sélection avec une commande homme-machine d'un mode de pilotage automatique sélectionné, un paramètre physique de la consigne de pilotage variant en fonction du mode de pilotage automatique sélectionné, ladite commande homme-machine transmettant un signal de commande porteur dudit mode de pilotage automatique sélectionné au système de commande.

En effet, l'hélicoptère hybride peut avoir un système de pilotage automatique apte à mettre en œuvre une pluralité de modes de pilotage. Un tel système de pilotage automatique peut être du type connu sous l'acronyme AFCS et l'expression anglaise « Automatic Flight Control System ». Le paramètre physique faisant l'objet de la consigne de pilotage peut varier en fonction du mode de pilotage automatique engagé. Par exemple, par défaut et quand aucun mode de pilotage automatique n'est engagé, la consigne de pilotage peut être une consigne directe de commande du pas des pales de la ou des hélices, par exemple selon la troisième réalisation précitée. Mais si le pilote engage par exemple un mode de pilotage de tenue d'une vitesse, telle que la vitesse connue sous l'acronyme « IAS » et l'expression anglaise « Indicated Air speed » par l'AFCS, alors la consigne de pilotage peut être une consigne de vitesse IAS. A partir d'une certaine vitesse d'avancement ou de consommation de puissance ou dans un autre mode de pilotage, la consigne de pilotage est par exemple une consigne de puissance.

Outre un procédé, l'invention concerne un hélicoptère hybride muni d'au moins une première hélice voire d'au moins une deuxième hélice, ledit hélicoptère hybride comportant un rotor de sustentation, ledit hélicoptère hybride comprenant un système de commande relié à des premières pales de la première hélice et le cas échéant à des deuxièmes pales de la deuxième hélice, ledit hélicoptère hybride ayant une commande de poussée en communication avec le système de commande.

Le système de commande est configuré pour appliquer le procédé de l'invention.

Selon un aspect, ladite commande de poussée comporte un organe de commande mobile selon au moins un degré de liberté par rapport à un portant. Ladite commande de poussée peut comporter un système de rappel qui exerce un effort de rappel sur ledit organe de commande pour placer ledit organe de commande dans ladite position de référence en l'absence d'un effort exercé par un pilote humain sur l'organe de commande.

Le système de rappel peut comprendre au moins un ressort ou équivalent par exemple.

Selon un aspect, l'effort de rappel peut varier selon une loi d'effort, ladite loi d'effort fournissant ledit effort de rappel en fonction de la position de l'organe de commande.

Selon une autre possibilité ou en complément, la commande de poussée peut comprendre un système de rappel comprenant un actionneur électrique. Cet actionneur électrique exerce un effort de rappel sur ledit organe de commande pour générer de manière usuelle un effort sur l'organe de commande qui varie selon une loi d'effort.

Selon un aspect, l'hélicoptère hybride peut comporter une interface homme-machine pour choisir un paramètre physique de la consigne de pilotage, ledit paramètre physique pouvant être sur choix d'un pilote une consigne d'accélération longitudinale ou une consigne de vitesse et d'un sens de rotation des premières pales et le cas échéant des deuxièmes pales ou une consigne de puissance, ladite interface homme-machine transmettant un signal de commande porteur dudit choix au système de commande.

Alternativement, ledit hélicoptère hybride comporte une commande homme-machine pour choisir un mode de pilotage automatique sélectionné parmi une pluralité de modes de pilotage automatique, ladite commande homme-machine transmettant un signal de commande porteur dudit mode de pilotage automatique sélectionné au système de commande.

La commande homme-machine permet de sélectionner un mode de pilotage automatique, la consigne de pilotage variant en fonction du mode de pilotage automatique sélectionné.

Selon un aspect, l'organe de commande est mobile en rotation ou en translation par rapport à un portant.

L'invention et ses avantages apparaîtront avec plus de détails dans le cadre de la description qui suit avec des exemples donnés à titre illustratif en référence aux figures annexées qui représentent :
[Fig 1] la figure 1, une vue schématique d'un hélicoptère hybride selon l'invention,
[Fig 2] la figure 2, une vue schématique d'un système de commande des hélices d'un hélicoptère hybride selon l'invention,
[Fig 3] la figure 3, une vue schématique d'un système de commande des hélices d'un hélicoptère hybride selon l'invention,
[Fig 4] la figure 4, un vue d'un organe de commande mobile en translation,
[Fig 5] la figure 5, une vue d'un organe de commande mobile en rotation,
[Fig 6] la figure 6, un diagramme illustrant des exemples de loi d'efforts,
[Fig 7] la figure 7, une vue illustrant le procédé appliqué,
[Fig 8] la figure 8, une vue illustrant un mode direct de fonctionnement avec un signal de commande porteur d'une consigne d'accélération longitudinale, et
[Fig 9] la figure 9, une vue illustrant un mode direct de fonctionnement avec un signal de commande porteur d'une consigne de vitesse de déplacement ou de puissance.

Les éléments présents dans plusieurs figures distinctes sont affectés d'une seule et même référence.

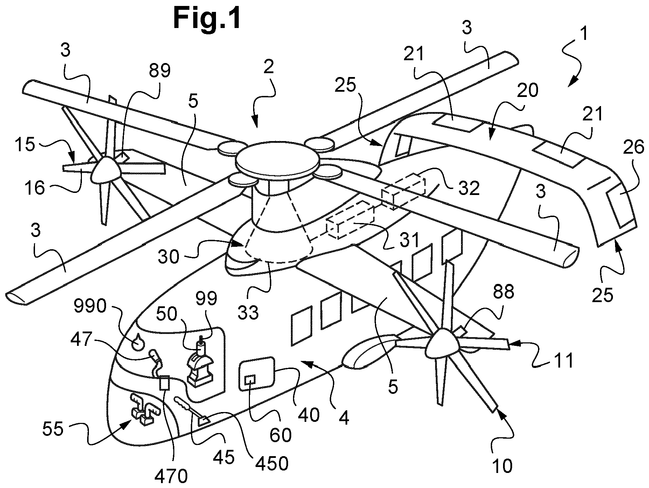

La figure 1 présente un hélicoptère hybride 1 selon l'invention.

Cet hélicoptère hybride 1 comporte un fuselage 4 au dessus duquel est agencé au moins un rotor de sustentation 2. Ce rotor de sustentation 2 est muni de plusieurs pales dénommées « pales principales 3 » par commodité.

De plus, l'hélicoptère hybride 1 est pourvu d'au moins une hélice dite « première hélice », de type tractive ou propulsive. Par exemple, l'hélicoptère hybride 1 est pourvu d'au moins une première hélice 10 et d'au moins une deuxième hélice 15. Les première et deuxième hélices 10, 15 comportent respectivement plusieurs premières pales 11 et plusieurs deuxièmes pales 16. La première hélice 10 et la deuxième hélice 15 peuvent être disposées latéralement par rapport au fuselage 4, notamment de part et d'autre d'un plan antéropostérieur de l'hélicoptère hybride 1. Sur la figure 1 les première et deuxième hélices 10, 15 peuvent être inversées. Les première et deuxième hélices 10, 15 sont éventuellement portées par un support 5. Un tel support 5 peut être éventuellement aérodynamique. Par exemple, le support 5 comporte une aile selon l'illustration de la figure 1. Selon la figure 1, les hélices 10, 15 sont disposées au niveau du bord d'attaque d'une aile. Selon un autre exemple, les hélices 10, 15 peuvent être disposées au niveau du bord de fuite de l'aile.

Par ailleurs, l'hélicoptère hybride 1 peut comprendre des surfaces de stabilisation voire de manœuvre. Par exemple, l'hélicoptère hybride 1 peut comprendre pour la profondeur au moins un empennage sensiblement horizontal 20 éventuellement avec des gouvernes de profondeur mobiles 21. Par exemple, l'hélicoptère hybride 1 peut comprendre pour la direction au moins un empennage sensiblement vertical 25 éventuellement avec des gouvernes de dérives mobiles 26. La figure 1 illustre ainsi un ensemble arrière en forme de U inversé mais cet ensemble arrière peut avoir diverses formes sans sortir du cadre de l'invention. Selon d'autre exemple, l'ensemble arrière peut avoir une forme de H, une forme de U... L'enseignement du brevet FR 3074142 est aussi applicable par exemple.

Par ailleurs, l'hélicoptère hybride 1 comporte une installation motrice 30 pour fournir une puissance au rotor de sustentation 2 et éventuellement à chaque hélice 10, 15. Cette installation motrice 30 comporte à cet effet au moins un moteur 31 contrôlé par un calculateur moteur 32 usuel.

Le terme « calculateur » désigne par la suite une unité qui peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur....

En outre, l'installation motrice 30 peut comprendre, par exemple au sein d'un système d'interconnexion, au moins une boîte de transmission de puissance, au moins un arbre, et/ou au moins un organe de connexion entre deux organes en rotation... Par exemple, un ou plusieurs moteurs 31 sont reliés mécaniquement par une ou des chaînes de liaison mécaniques à une boîte de transmission de puissance principale 33 qui entraîne en rotation le rotor de sustentation 2. De plus, la boîte de transmission de puissance principale 33 peut être reliée mécaniquement par au moins un arbre à une boîte de transmission de puissance latérale par hélice 10, 15 qui est donc à son tour reliée à une hélice 10, 15.

Les vitesses de rotation des sorties du ou des moteurs 31, des hélices 10, 15, du rotor de sustentation 2 et du système mécanique d'interconnexion sont éventuellement proportionnelles entre elles, le rapport de proportionnalité étant éventuellement constant quelle que soit la configuration de vol de l'hélicoptère hybride 1 en conditions normales de fonctionnement, à savoir hors cas de panne ou d'essais ou de formation.

Par ailleurs, l'hélicoptère hybride 1 peut comprendre diverses commandes pour être piloté.

En particulier, l'hélicoptère hybride 1 peut comprendre un système de commande 40 relié à des commandes de vol pour piloter collectivement et cycliquement le pas des pales principales 3. Un tel système de commande 40 peut par exemple inclure un ensemble de plateaux cycliques. Ainsi, à chaque instant, le pas des pales principales 3 peut être égal à la somme d'un pas collectif identique pour toutes les pales principales 3 et d'un pas cyclique qui varie en fonction de l'azimut de chaque pale principale 3. Le pas des pales principales 3 est dénommé « pas principal » pour être clairement distingué du pas d'autres pales.

Dès lors, l'hélicoptère hybride 1 peut comprendre une commande de pas collectif 45 manœuvrable par un pilote qui agit sur au moins une chaîne de commande mécanique et/ou électrique du système de commande 40 pour faire varier collectivement le pas principal des pales principales 3, via le cas échéant l'ensemble de plateaux cycliques. Par exemple, la commande de pas collectif 45 comporte un levier. En outre, la commande de pas collectif 45 peut comprendre un senseur de pas collectif 450 qui émet un signal analogique, numérique, électrique ou optique qui varie en fonction de la position d'un organe mobile. Par exemple, la commande de pas collectif 45 comporte un levier et un senseur de pas collectif 450 incluant au moins un capteur de position angulaire pour évaluer une position du levier, tel que par exemple un potentiomètre. Le senseur de pas collectif 450 peut aussi être agencé sur un organe mobile conjointement avec la commande de pas collectif par exemple en aval de vérins série et/ou de trim le cas échéant.

De même, l'hélicoptère hybride 1 peut comprendre une commande de pas cyclique 47 manœuvrable par un pilote qui agit sur une ou plusieurs chaînes de commande mécaniques et/ou électriques du système de commande pour faire varier cycliquement le pas des pales principales 3, via le cas échéant l'ensemble de plateaux cycliques. En outre, la commande de pas cyclique 47 peut comprendre un senseur de position 470 qui émet un signal analogique, numérique, électrique ou optique qui varie en fonction de la position d'un organe mobile. Par exemple, la commande de pas cyclique 47 comporte un manche et un senseur de position 470 incluant au moins deux capteurs de position angulaire pour évaluer une position du manche, tels que par exemple des potentiomètres.

De manière usuelle, l'hélicoptère hybride 1 peut comprendre des commandes reliées au système de commande 40 pour piloter le pas des pales de la ou des hélices, et notamment des premières pales 11 et des deuxièmes pales 16 selon l'exemple illustré. A chaque instant et notamment en présence de deux hélices, le premier pas des premières pales 11 de la première hélice 10 peut être égal à la somme d'une composante de pas moyen et d'une composante de pas différentiel alors que le deuxième pas des deuxièmes pales 16 de la deuxième hélice 15 est égal à la différence entre cette composante de pas moyen et la composante de pas différentiel.

Eventuellement, l'hélicoptère hybride 1 comporte un premier senseur 88 de mesure pour mesurer la première valeur du premier pas et un deuxième senseur 89 de mesure pour mesurer la deuxième valeur du deuxième pas. Par exemple, le premier senseur 88 de mesure comporte un capteur de position émettant un signal analogique, numérique, électrique ou optique qui varie en fonction de la position d'un arbre de commande du pas des premières pales 11. De même, le deuxième senseur 89 peut comporter un capteur de position émettant un signal analogique, numérique, électrique ou optique qui varie en fonction de la position d'un arbre de commande du pas des deuxièmes pales 16. Chaque capteur de position peut être d'un type usuel et peut par exemple comprendre un capteur de vitesse permettant d'obtenir une position par intégration, un potentiomètre...

De manière usuelle, l'hélicoptère hybride 1 peut comprendre une commande de poussée 50 manœuvrable par un pilote qui agit sur une ou plusieurs chaînes de commande mécaniques et/ou électriques du système de commande 40 pour faire varier le pas de la ou des hélices afin par exemple de piloter une vitesse d'avancement de l'hélicoptère hybride 1. Par exemple, la commande de poussée 50 peut soit piloter le pas total de la ou des hélices soit piloter la valeur d'une composante de pas moyen le cas échéant.

De même, l'hélicoptère hybride 1 peut comprendre une commande de lacet 55 manœuvrable par un pilote qui agit sur une ou plusieurs chaînes de commande mécaniques et/ou électriques du système de commande 40 pour faire varier le cas échéant la composante de pas différentiel du pas des premières pales 11 et du pas des deuxièmes pales 16. La commande de lacet peut prendre la forme d'un palonnier par exemple.

En outre, le système de commande 40 peut comporter un ou plusieurs calculateurs de pilotage 60 en communication au moins avec la commande de poussée 50 pour appliquer le procédé de l'invention ainsi qu'éventuellement avec le premier senseur 88 de mesure, le deuxième senseur 89 de mesure et/ou le senseur de pas collectif 450 voire avec une ou plusieurs commandes précitées.

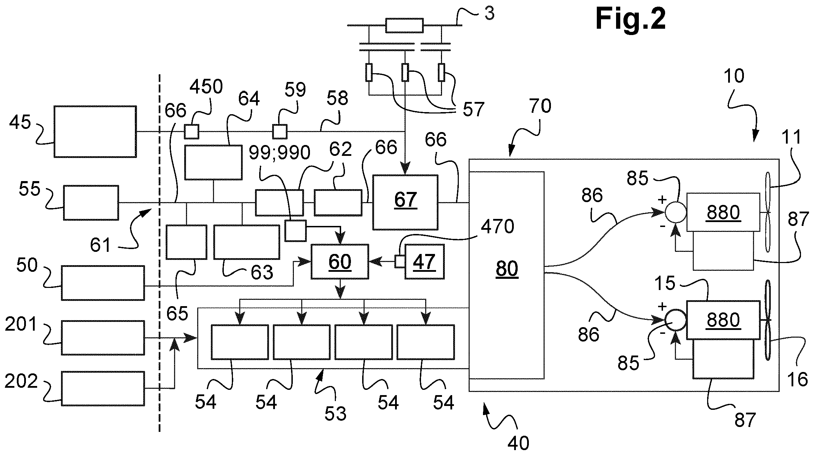

La figure 2 présente un exemple de système de commande 40 des hélices 10, 15.

Selon ce système de commande 40, la commande pas collectif 45 est reliée à une chaîne de commande de pas collectif 58 du système de commande 40 pour piloter la composante de pas collectif des pales principales 3. Par exemple, la chaîne de commande de pas collectif 58 comporte aux moins trois servocommandes 57 articulées à un plateau non tournant de l'ensemble de plateaux cycliques, cet ensemble de plateaux cycliques comprenant un plateau tournant relié par des bielles de pas à un levier de pas de chaque pale principale 3. Eventuellement, la chaîne de commande de pas collectif 58 comporte au moins un actionneur 59 piloté par le calculateur de pilotage 60 relié à un distributeur fluidique de chaque servocommande via des liens usuels. De plus, la chaîne de commande de pas collectif 58 peut aussi comprendre des liens usuels reliés mécaniquement à la commande de pas collectif 45. La chaîne de commande de pas collectif 58 peut aussi comprendre au moins un senseur de pas collectif 450 en communication avec le calculateur de pilotage 60, le senseur de pas collectif 450 émettant un signal variant avec la valeur de la composante de pas collectif.

Par exemple, un tel senseur de pas collectif 450 est agencé sur un combinateur non illustré.

Selon ce système de commande 40, la commande de lacet 55 est reliée par une première chaîne mécanique principale 61 à un combinateur mécanique 80 d'une chaîne mécanique aval 70. Cette première chaîne mécanique principale 61 peut comporter au moins un lien rigide 66, au moins un vérin série de lacet 62, des organes 63 générant des efforts de friction. Par exemple, un lien rigide peut prendre la forme d'une bielle ou équivalant. Un dispositif usuel 64 peut aussi amortir les déplacements de la commande de lacet 55. Au moins un vérin de trim de lacet 65 peut être agencé en parallèle de la première chaîne mécanique principale 61. Les vérins de trim en lacet 65 et série de lacet 62 sont commandés par le calculateur de pilotage 60.

En outre, la première chaîne mécanique principale 61 peut comporter un dispositif mécanique à géométrie variable 67 permettant par exemple de modifier un ordre donné par la commande de lacet 55 en fonction d'une manœuvre de la commande de pas collectif 45 via un déplacement de la chaîne de commande de pas collectif 58 ou d'une chaîne mécanique dédiée et/ou d'une manœuvre de la commande de poussée 50 directement ou via le calculateur de pilotage 60. Le calculateur de pilotage 60 peut aussi agir sur un ordre donné par la commande de lacet 55 en pilotant les vérins séries de lacet 62 par exemple.

Le combinateur 80 est en outre lié, pour chaque hélice 10, 15, à une tige de commande d'un distributeur hydraulique 85 par une chaîne cinématique secondaire 86 de la chaîne cinématique aval 70, et par exemple par une commande à billes. En fonction des ordres donnés par le pilote, les tiges de commande sont déplacées afin que les distributeurs hydrauliques 85 relient des servocommandes 880 au circuit hydraulique de l'hélicoptère hybride 1 pour modifier le premier pas des premières pales 11 et le deuxième pas de deuxièmes pales 16. Un système de modulation 87 peut moduler les ordres transmis par le combinateur 80. Par exemple un tel système de modulation 87 comporte une tige de recopie du distributeur hydraulique 85 pouvant être déplacée par un actionneur sur ordre du calculateur de pilotage 60.

Par ailleurs, la commande de poussée 50 est liée au combinateur 80 par une deuxième chaîne cinématique principale 53 par exemple, la deuxième chaîne cinématique principale 53 comporte au moins un vérin série de poussée 54 relié mécaniquement au combinateur 80. Chaque vérin série de poussée 54 peut recevoir un signal analogique, numérique, électrique ou optique émis par le calculateur de pilotage 60 sur ordre de la commande de poussée 50. Par suite, la commande de poussée 50 émet un signal de commande en permanence qui est transmis au calculateur de pilotage 60, ce calculateur de pilotage 60 pilotant un ou plusieurs vérins série de poussée 54 en conséquence.

Eventuellement, une commande de secours 201 peut aussi être mise en place, et par exemple une commande reliée mécaniquement à la deuxième chaîne cinématique principale 53. Selon un exemple, un levier peut déplacer la deuxième chaîne cinématique principale 53.

Eventuellement, une commande d'immobilisation 202 peut aussi être envisagée pour immobiliser la commande de secours 51.

Dans ces conditions, le combinateur 80 additionne l'ordre de modification de la composante de pas moyen, donné via la commande de poussée 50 par les vérins série de poussée 54, et l'ordre de changement de la composante de pas différentiel donné par la commande de lacet 55. Des ordres de modification de la composante de pas moyen et de changement de la composante de pas différentiel peuvent aussi être émis par le calculateur de pilotage et transmis aux divers vérins série 62, 54 et de trim 65 voire au dispositif 87. Plus précisément, lorsque la commande de poussée 50 est manœuvrée, un signal de commande est transmis au calculateur de pilotage 60. Le calculateur de pilotage 60 commande alors éventuellement un ou plusieurs vérins séries de poussée 54 pour mettre en mouvement le combinateur 80 afin de modifier la composante de pas moyen des premières pales 11 et des deuxièmes pales 16.

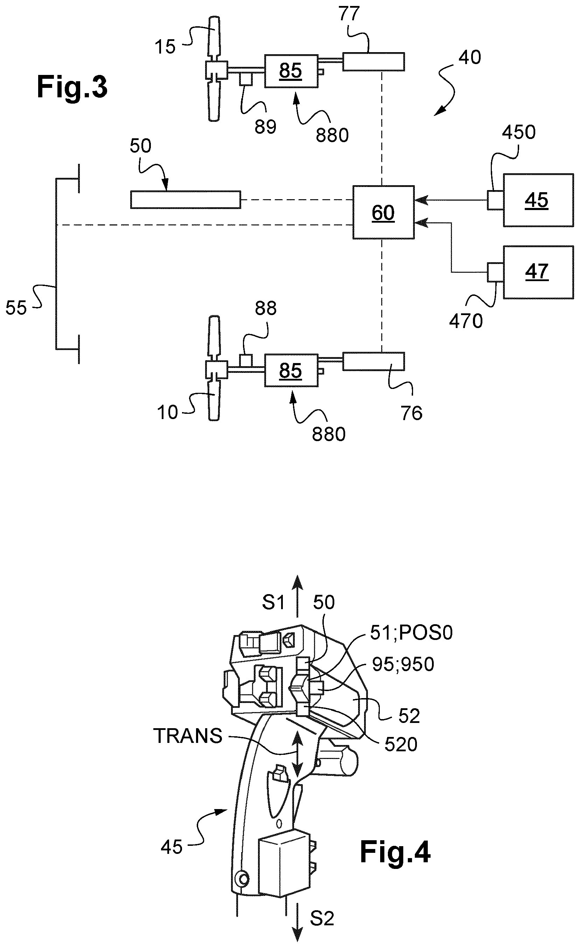

La figure 3 présente un autre exemple de système de commande pour piloter les hélices 10, 15.

Selon cet exemple, la commande de lacet 55, la commande de poussée 50, la commande de pas collectif 45 et la commande de pas cyclique 47 communiquent avec le calculateur de pilotage 60. Ce calculateur de pilotage 60 est en communication avec des actionneurs 76, 77 reliés respectivement aux distributeurs hydrauliques 85.

Le calculateur de pilotage 60 applique alors une ou plusieurs lois mémorisées pour commander les actionneurs 76, 77 en fonction des signaux émis par la commande de lacet 55, la commande de poussée 50 et la commande de pas collectif 45 voire la commande de pas cyclique 47.

D'autres architectures sont envisageables sans sortir du cadre de l'invention.

Selon un autre aspect, l'hélicoptère hybride peut comporter une interface homme-machine 99 pour choisir un paramètre physique d'une consigne de pilotage. Ce paramètre physique peut être sur choix d'un pilote une consigne d'accélération longitudinale ou une consigne de vitesse et d'un sens de rotation des pales de la ou des hélices, et donc des premières pales 11 voire le cas échéant des deuxièmes pales 16, ou une consigne de puissance.

Cette interface homme-machine 99 transmet un signal de commande, analogique ou numérique par exemple, porteur dudit choix au système de commande 40 et éventuellement au calculateur de pilotage 60.

L'interface homme-machine 99 peut être une interface usuelle tactile, vocale, ou visuelle par exemple. L'interface homme-machine 99 illustrée comporte un bouton mais tout type d'interface est envisageable, telle qu'un écran tactile, un sélecteur rotatif...

Alternativement ou en complément, une commande homme-machine 990 peut permettre de sélectionner un mode de pilotage automatique, ladite commande homme-machine 990 transmettant un signal de commande porteur du mode de pilotage automatique choisi au système de commande. Cette commande homme-machine 990 transmet un signal de commande, analogique ou numérique par exemple, porteur dudit choix au système de commande 40 et éventuellement au calculateur de pilotage 60.

La commande homme-machine 990 peut être une interface usuelle tactile, vocale, ou visuelle par exemple. La commande homme-machine 990 illustrée comporte un sélecteur rotatif mais tout type d'interface est envisageable, telle qu'un écran tactile, un bouton...

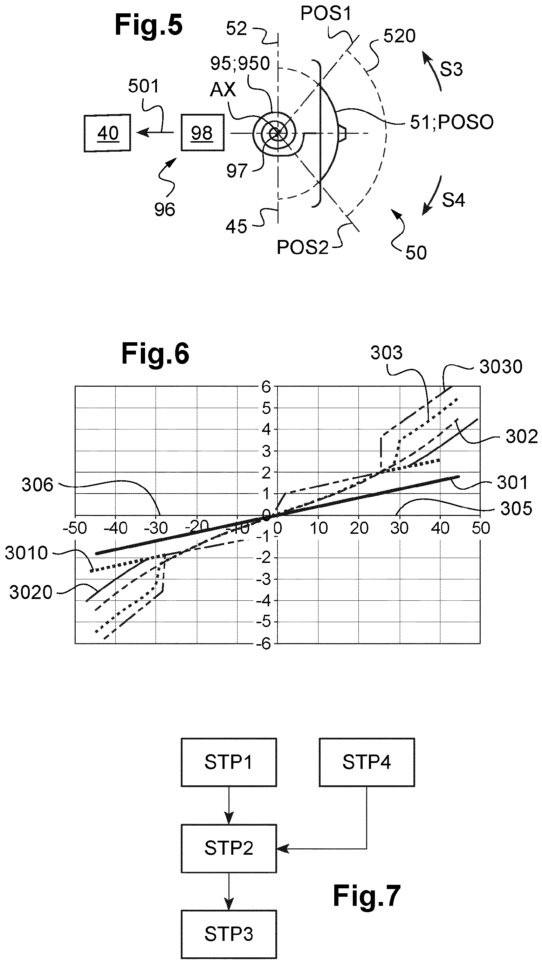

Par ailleurs et en référence aux figures 4 et 5, la commande de poussée 50 peut comporter un organe de commande 51 mobile par rapport à un portant 52. Ces figures illustrent un portant 52 qui comprend la commande de poussée 50 à titre d'exemple. Le terme portant désigne un objet portant l'organe de commande et par rapport auquel l'organe de commande peut se déplacer. Le terme portant peut aussi désigner par exemple un circuit imprimé ou équivalent portant l'organe de commande 51.

L'organe de commande 51 est déplaçable par un pilote par rapport à un portant 52 le long d'un chemin de déplacement 520 et peut atteindre n'importe quelle position sur ce chemin de déplacement 520 entre une première position extrême POS1 et une deuxième position extrême POS2 incluses illustrées sur la figure 5.

Selon la première variante de la figure 4, l'organe de commande a la forme d'un bouton mobile uniquement en translation TRANS selon deux sens opposés S1, S2, tel qu'un curseur. Selon la deuxième variante de la figure 5, l'organe de commande 51 est mobile uniquement en rotation ROT autour d'un axe de rotation AX selon deux sens opposés S3, S4.

Quelle que soit la variante, la commande de poussée 50 peut comporter un système de rappel 95 qui exerce un effort de rappel sur l'organe de commande 51 pour le placer dans une position de référence POS0. Par exemple, un tel système de rappel comporte au moins un ressort et/ou un actionneur électrique 950 générant une loi d'effort mémorisée. Par exemple, l'actionneur électrique 950 comporte un moteur générant un effort sur l'organe de commande 51 qui varie en fonction de la position de l'organe de commande 51, cette position pouvant être mesurée à l'aide d'un capteur usuel.

Un tel effort de rappel peut varier selon une loi d'effort.

La figure 6 comporte un diagramme présentant une position en abscisse et un effort en ordonnée. Ce diagramme illustre six lois différentes pouvant être obtenues de manière usuelle.

Selon une première loi d'effort 301, l'effort de rappel varie linéairement en fonction de la position de l'organe de commande 51 par rapport au portant 52.

Selon une deuxième loi d'effort 302, l'effort de rappel ne varie pas linéairement en fonction de la position de l'organe de commande 51 par rapport au portant 52.

Selon une troisième loi d'effort 303, non seulement l'effort de rappel ne varie pas linéairement en fonction de la position de l'organe de commande 51 par rapport au portant 52 mais en plus la loi d'effort comporte des seuils 305, 306 à partir desquelles l'effort de rappel varie sensiblement.

La quatrième loi d'effort 3010, la cinquième loi d'effort 3020 et la sixième loi d'effort 3030 sont respectivement des types de la première loi d'effort 301, de la deuxième loi d'effort 302 et de la troisième loi d'effort 303 chacune avec un seuil d'effort à vaincre pour quitter la position de référence POS0 située à l'origine du diagramme illustré.

Par ailleurs et en référence à la figure 5 par exemple, la commande de poussée 50 comporte un générateur de signal 96 qui émet en permanence et au moins hors cas de panne, vers le système de commande 40, au moins un signal de commande qui varie à chaque instant en fonction de la position courante de l'organe de commande par rapport au portant 52. Le générateur de signal 96 peut être partiellement ou entièrement déporté par rapport à l'organe de commande.

Par exemple, le générateur de signal 96 comporte un circuit électrique 98 coopérant avec un potentiomètre 97, ce potentiomètre 97 ayant une résistance électrique qui varie en fonction de la position courante de l'organe de commande 51.

Les figures 4 et 5 illustrent des exemples. La commande de poussée 50 peut comprendre tout dispositif muni d'un organe de commande mobile et générant un signal de commande en permanence.

La figure 7 illustre le procédé de l'invention.

A chaque instant, le procédé comporte une étape de transmission STP1 d'un signal de commande par la commande de poussée 50 au système de commande 40. La commande de poussée 50 émet donc en permanence un signal de commande qui est transmis au système de commande 50, et par exemple au calculateur de pilotage 60. Ce signal de commande est porteur d'une consigne de pilotage.

Dès lors, durant une étape de traitement STP2, le système de commande 40 traite le signal de commande pour piloter la ou les hélices. Par exemple, la calculateur de pilotage 60 reçoit le signal de commande, l'analyse et le traite pour générer une consigne de pas voire une consigne de pas moyen lorsque le pas des pales de la ou des hélices comporte une composante de pas moyen et une composante de pas différentiel.

Selon la réalisation, le signal de commande est porteur d'une valeur d'une consigne de pilotage d'un paramètre physique pouvant être une consigne d'accélération longitudinale ou une consigne de vitesse de rotation et d'un sens de rotation des pales de la ou des hélices, et donc des premières pales 11 et le cas échéant des deuxièmes pales 16, ou une consigne de puissance.

Selon une possibilité, le procédé peut comprendre une étape de sélection STP4 avec une interface homme-machine 99 illustrée sur la figure 1 pour choisir le paramètre physique porté par le signal de commande. Cette étape peut éventuellement être entreprise en vol.

Selon d'autres variantes, le paramètre physique porté par le signal de commande est fixe ou varie en fonction du mode de pilotage engagé au sein d'un système de pilotage automatique.

Par exemple, durant l'étape de sélection STP4 une commande homme-machine 990 permet à un pilote de choisir un mode de pilotage automatique sélectionné à appliquer par le calculateur de pilotage 60 et/ou un par un autre calculateur. Le paramètre physique associé à la consigne de pilotage peut alors varier en fonction au moins du mode de pilotage automatique sélectionné. Par exemple, le calculateur de pilotage comporte une mémoire associant chaque mode de pilotage à un paramètre physique.

Indépendamment de cet aspect, le système de commande 40 et par exemple le calculateur de pilotage 60 reçoit donc le signal de commande porteur de la consigne de pilotage et en déduit par des moyens usuels la valeur de la consigne de pilotage du paramètre physique à atteindre. Par exemple, le calculateur de pilotage 60 comporte un convertisseur analogique/numérique qui convertit le signal de commande pour en déduire suivant la variante une consigne d'accélération longitudinale ou une consigne de vitesse et d'un sens de rotation des premières pales 11 voire des deuxièmes pales 16 ou une consigne de puissance. Selon un autre exemple, le signale de commande est soustrait à un signal porteur d'une valeur courante du paramètre physique faisant l'objet de la consigne de pilotage pour générer un signal d'erreur, ce signal d'erreur étant converti en une valeur numérique représentant la valeur de la consigne de pilotage.

Indépendamment de la manière de l'obtenir, cette consigne de pilotage est ensuite transformée en une consigne de pas par le biais par exemple d'une ou plusieurs lois. Chaque loi peut prendre la forme d'un tableau de valeurs, d'une relation mathématique...

Dès lors, le système de commande 40 traite la consigne de pas durant une étape de pilotage STP3 pour piloter le pas des pales de la ou des hélices, à savoir le premier pas et le cas échéant le deuxième pas, afin de respecter la consigne de pilotage donnée par le pilote en manœuvrant l'organe de commande. Par exemple, le calculateur de pilotage ou un autre calculateur injecte la consigne de pas dans au moins une boucle de régulation ouverte ou fermée pour émettre un signal vers au moins un actionneur de poussée 54.

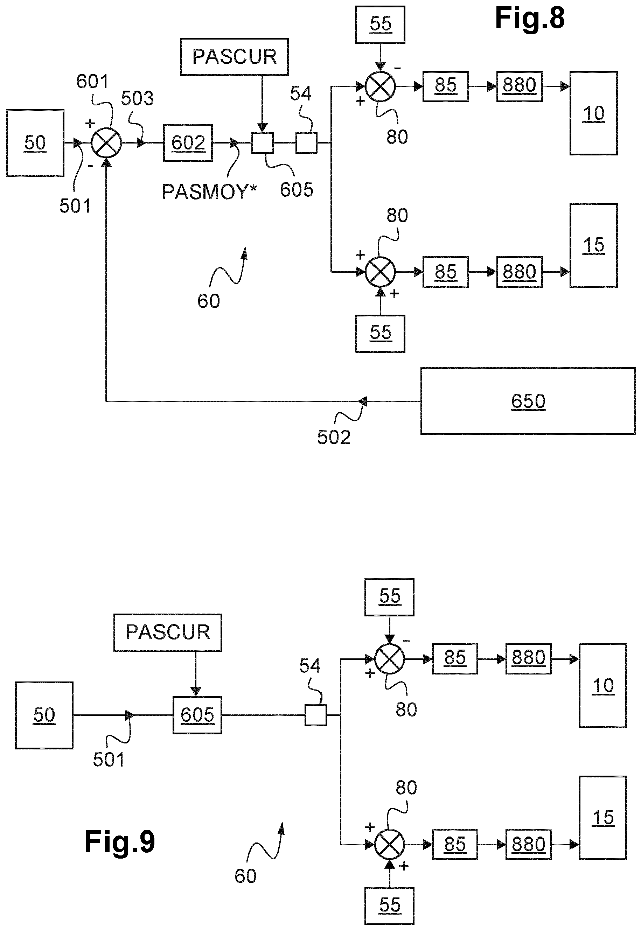

La figure 8 illustre un mode direct de régulation mis en œuvre par un signal de commande porteur d'une consigne d'accélération longitudinale.

La commande de poussée 50 génère en permanence le signal de commande 501. Le calculateur de pilotage 60 comporte un module de soustraction 601 qui soustrait au signal de commande 501 un signal de mesure d'accélération longitudinal 502 pour obtenir un signal d'erreur 503. Alternativement, un traitement numérique est envisageable.

Ce signal de mesure d'accélération longitudinal 502 est émis par un capteur d'accélération 650 usuel. Une consigne de pas de type consigne de pas moyen PASMOY* est alors par exemple directement issue d'un module de correction proportionnel intégral dérivé 602 qui reçoit en entrée le signal d'erreur 503. Un module de pilotage 605 du calculateur de pilotage 60 reçoit la consigne de pas et une information relative à un pas courant PASCUR pour piloter alors au moins un actionneur de poussée 54.

A cet effet, le calculateur de pilotage peut être en communication avec au moins un senseur mesurant le pas courant PASCUR ou la composante de pas moyen le cas échéant. Selon la figure 1, un premier senseur 88 de mesure et un deuxième senseur 89 de mesure transmettent des signaux au calculateur de pilotage, la composante de pas moyen étant égale à la demi-somme du premier pas et du deuxième pas mesurés et formant l'information relative à un pas courant.

Un tel procédé peut aussi être appliqué à une consigne de poussée.

La figure 9 illustre un mode direct de régulation mis en œuvre par un signal de commande porteur d'une consigne de vitesse de rotation et d'un sens de rotation des premières pales 11 et le cas échéant des deuxièmes pales 16.

La commande de poussée 50 génère en permanence le signal de commande 501. Un module de pilotage 605 du calculateur de pilotage détermine la valeur de la consigne de vitesse en traitant le signal de commande puis la transforme en une consigne de pas, par exemple en appliquant une ou plusieurs lois mémorisées. Le calculateur de pilotage traite alors la consigne de pas pour générer un signal transmis à au moins un actionneur de poussée 54 pour déplacer les pales de la ou des hélices autour de leurs axes de pas respectifs à la vitesse de rotation spécifiée. A cet effet, le calculateur de pilotage peut être en communication avec un senseur mesurant le pas courant PASCUR ou la composante de pas moyen le cas échéant de la ou des hélices.

A titre illustratif, le pilote manœuvre l'organe de commande dans une position particulière. Cet organe de commande transmet un signal de commande porteur d'une consigne de vitesse indiquant d'augmenter le pas de la ou des hélices selon une vitesse 0.1 degré par seconde. Le calculateur de pilotage peut selon cette illustration avoir un temps de traitement d'une seconde. Autrement dit, le calculateur de pilotage applique le procédé toutes les secondes. Le pas courant est de 2 degrés. A l'itération courante, le calculateur de pilotage calcule le pas à atteindre pour que les pales de la ou des hélices se déplacent à la vitesse spécifiée. Le calculateur de pilotage indique donc d'atteindre un pas de 2.1 degrés à au moins un actionneur. A l'itération suivante, le calculateur de pilotage indiquera d'atteindre un pas de 2.2 degrés et ainsi de suite tant que l'organe de commande reste dans la position particulière.

D'autres modes de fonctionnement sont envisageables en utilisant un signal de commande émis en permanence et porteur d'une consigne de pilotage et notamment des modes protégés. Par exemple, les modes protégés en puissance, couple ou vitesse de rotation du document FR 2946316 sont envisageables.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, l'hélicoptère hybride peut comprendre une seule hélice et/ou plusieurs rotors de sustentation.

## Revendications

1. Procédé de commande d'au moins une première hélice (10) d'un hélicoptère hybride (1), ledit hélicoptère hybride (1) comportant un rotor de sustentation (2), ledit hélicoptère hybride (1) comprenant un système de commande (40) relié à des premières pales (11) de la première hélice (10), ledit hélicoptère hybride (1) ayant une commande de poussée (50) pour piloter un premier pas des premières pales (11), la commande de poussée (50) étant en communication avec le système de commande (40), ladite commande de poussée (50) comportant un organe de commande (51) mobile selon au moins un degré de liberté par rapport à un portant (52),
**caractérisé en ce que** le procédé comporte les étapes suivantes :
- transmission (STP1) en permanence d'un signal de commande porteur d'une consigne de pilotage par la commande de poussée (50) au système de commande (40), ledit signal de commande étant un signal électrique analogique et à chaque instant fonction d'une position courante de l'organe de commande (51) par rapport audit portant (52) au moins hors cas de panne,
- transformation (STP2) de la consigne de pilotage par le système de commande (40) en une consigne de pas,
- pilotage (STP3) dudit premier pas par le système de commande (40) en appliquant ladite consigne de pas.

2. Procédé selon la revendication 1,
**caractérisé en ce que** ledit procédé comporte une étape d'application d'un effort de rappel avec un système de rappel (95) sur ledit organe de commande (51) pour placer ledit organe de commande (51) dans une position de référence (POS0) par rapport au portant en l'absence d'un effort exercé par un pilote humain sur l'organe de commande (51).

3. Procédé selon la revendication 2,
**caractérisé en ce que** ledit effort de rappel varie selon une loi d'effort (301, 302, 303), ladite loi d'effort (301, 302, 303) fournissant ledit effort de rappel exercé sur ledit organe de commande (51) par le système de rappel (95) en fonction de ladite position de l'organe de commande (51) par rapport au portant.

4. Procédé selon la revendication 3,
**caractérisé en ce que** ladite loi d'effort est non linéaire.

5. Procédé selon l'une quelconque des revendications 1 à 4,
**caractérisé en ce que** ledit au moins un degré de liberté comporte un degré de liberté en rotation (ROT).

6. Procédé selon l'une quelconque des revendications 1 à 4,
**caractérisé en ce que** ledit au moins un degré de liberté comporte un degré de liberté en translation (TRANS).

7. Procédé selon l'une quelconque des revendications 1 à 6,
**caractérisé en ce que** ladite consigne de pilotage est une consigne d'accélération longitudinale.

8. Procédé selon l'une quelconque des revendications 1 à 6,
**caractérisé en ce que** ladite consigne de pilotage est une consigne de vitesse de rotation et d'un sens de rotation des premières pales (11) d'hélice.

9. Procédé selon l'une quelconque des revendications 1 à 6,
**caractérisé en ce que** ladite consigne de pilotage est une consigne de puissance.

10. Procédé selon l'une quelconque des revendications 1 à 6,
**caractérisé en ce que** ledit procédé comporte une étape de sélection (STP4) avec une interface homme-machine (99) d'un paramètre physique de la consigne de pilotage, ledit paramètre physique pouvant être sur choix d'un pilote une consigne d'accélération longitudinale ou une consigne de vitesse et d'un sens de rotation des premières pales (11) ou une consigne de puissance, ladite interface homme-machine (99) transmettant un signal de commande porteur dudit choix au système de commande (40).

11. Procédé selon l'une quelconque des revendications 1 à 9,
**caractérisé en ce que** ledit procédé comporte une étape de sélection (STP4) avec une commande homme-machine (990) d'un mode de pilotage automatique sélectionné, un paramètre physique de la consigne de pilotage variant en fonction du mode pilotage sélectionné, ladite commande homme-machine (990) transmettant un signal de commande porteur dudit mode de pilotage automatique sélectionné au système de commande (40).

12. Hélicoptère hybride (1) muni d'au moins une première hélice (10), ledit hélicoptère hybride (1) comportant un rotor de sustentation (2), ledit hélicoptère hybride (1) comprenant un système de commande (40) relié à des premières pales (11) de ladite au moins une première hélice (10), ledit hélicoptère hybride (1) ayant une commande de poussée (50) en communication avec le système de commande (40), ladite commande de poussée (50) comportant un organe de commande (51) mobile selon au moins un degré de liberté par rapport à un portant (52),
**caractérisé en ce que** ledit système de commande (40) est configuré pour appliquer le procédé selon l'une quelconque des revendications 1 à 11.

13. Hélicoptère hybride selon la revendication 12,
**caractérisé en ce que** ladite commande de poussée (50) comporte un système de rappel (95, 950) qui exerce un effort de rappel sur ledit organe de commande (51) pour placer ledit organe de commande (51) dans une position de référence (POS0) en l'absence d'un effort exercé par un pilote humain sur l'organe de commande (51).

14. Hélicoptère hybride selon l'une quelconque des revendications 12 à 13,
**caractérisé en ce que** ledit système de rappel (95) comporte un actionneur électrique (950).

15. Hélicoptère hybride selon l'une quelconque des revendications 12 à 14,
**caractérisé en ce que** ledit hélicoptère hybride comporte une interface homme-machine (99) pour choisir un paramètre physique de la consigne de pilotage, ledit paramètre physique pouvant être sur choix d'un pilote une consigne d'accélération longitudinale ou une consigne de vitesse et d'un sens de rotation des premières pales (11) ou une consigne de puissance, ladite interface homme-machine (99) transmettant un signal de commande porteur dudit choix au système de commande (40).

16. Hélicoptère hybride selon l'une quelconque des revendications 12 à 14,
**caractérisé en ce que** ledit hélicoptère hybride comporte une commande homme-machine (990) pour choisir un mode de pilotage automatique sélectionné parmi une pluralité de modes de pilotage automatique, ladite commande homme-machine (990) transmettant un signal de commande porteur dudit mode de pilotage automatique sélectionné au système de commande (40).

17. Hélicoptère hybride selon l'une quelconque des revendications 12 à 16,
**caractérisé en ce que** ledit organe de commande (51) est mobile en rotation.

18. Hélicoptère hybride selon l'une quelconque des revendications 12 à 17,
**caractérisé en ce que** ledit organe de commande (51) est mobile en translation.
